# EUROPÄISCHE PATENTSCHRIFT

(11) **EP 1 442 232 B1**
(45) Veröffentlichungstag und Bekanntmachung des Hinweises auf die Patenterteilung: **14.06.2006**
(21) Anmeldenummer: 02792721.9
(22) Anmeldetag: 16.10.2002
(51) Int. Cl.: F16H 3/091

(54) **SCHALTGETRIEBE IN VORGELEGEWELLENBAUWEISE**
GEARBOX EMBODIED WITH A LAYSHAFT
TRANSMISSION A ARBRE DE RENVOI

(30) Priorität: 19.10.2001 DE 10151752
(43) Veröffentlichungstag der Anmeldung: 04.08.2004
(73) Patentinhaber: ZF FRIEDRICHSHAFEN AG, 88038 Friedrichshafen (DE)
(72) Erfinder: BÜRKLE, Rolf, 88214 Ravensburg (DE); LANZ, Hermann, 88699 Frickingen (DE); LAMKE, Martin, 88212 Ravensburg (DE)
(86) Internationale Anmeldenummer: PCT/EP2002/011538
(87) Internationale Veröffentlichungsnummer: WO 2003/033941

(56) Entgegenhaltungen:
- GB-A- 1 114 805
- GB-A- 1 116 830
- JP-A- 49 021 556
- US-A- 3 859 870
- US-A- 4 838 105

## Beschreibung

Die Erfindung betrifft ein Schaltgetriebe in Vorgelegewellenbauweise, insbesondere für ein Kraftfahrzeug, mit einer Eingangswelle, welche mit einer Antriebsmaschine verbindbar ist, mit einer Ausgangswelle, welche mit wenigstens einer Antriebsachse verbindbar ist, mit einer dazwischen angeordneten Hauptwelle sowie einer mit der Hauptwelle zusammenwirkenden Vorgelegewelle, wobei auf der Hauptwelle und der Vorgelegewelle schaltbare Zahnradpaare angeordnet sind.

Bei Schaltgetrieben in Vorgelegewellenbauweise, insbesondere für Nutzfahrzeuge, stellt der Achsabstand zwischen der Getriebehauptwelle und der Vorgelegewelle eine zentrale Größe dar. Je größer das zu übertragende Moment ist, desto größer muß der Achsabstand gewählt werden. Dabei sollte er für die höheren Gänge, d. h. für kleine Übersetzungen, eher klein und für die niederen Gänge, d. h. für hohe Übersetzungen, eher größer ausgelegt werden. Der Achsabstand ist jeweils ein Kompromiß zwischen den Idealabmessungen der einzelnen Übersetzungsstufen.

Eine weitere Rahmenbedingung zur Auswahl des Achsabstandes bei Schaltgetrieben stellt die Anbindung eines Nebenabtriebs bei Nutzfahrzeuggetrieben, insbesondere bei Range-Getrieben mit Planetentrieb, als Gruppengetriebe dar. Hier muß der Achsabstand so groß gewählt werden, daß die Adapterwelle für den Nebenabtrieb an den mit der Hauptwelle verbundenen Bauteilen, beispielsweise einem Planetenradsatz, vorbeigeführt werden kann.

Je nach konstruktiver Ausgestaltung des Getriebes und der Lagerung der darin vorgesehenen Wellen ist eine Adapterwelle zwischen einer Vorgelegewelle und einem Nebenabtrieb angeordnet, wobei die Adapterwelle koaxial zur Vorgelegewelle und mit dieser über ein Mitnahmeprofil zur Drehmomentübertragung verbunden ist. Damit der Nebenabtrieb und der Hauptabtrieb des Getriebes nebeneinander vorgesehen werden können, muß zwischen den Adaptern am Neben- und am Hauptabtrieb, der mit einer Kardanwelle verbunden ist, ein Mindestabstand eingehalten werden, der bei der Konstruktion berücksichtigt werden muß. Dies wiederum bedingt auf den Wellen Zahnräder mit entsprechend großen Durchmessern und Massen, was sich auf das Gesamtgewicht des Getriebes nachteilig auswirkt.

So ist es beispielsweise bekannt, um den Achsabstand zwischen den Wellen klein zu halten, die Adapterwelle über eine Stirnradverzahnung anzutreiben, beispielsweise über das Rückwärtsgang-Zwischenrad, um damit auch die Drehrichtung der Adapterwelle entsprechend der Drehrichtung der Vorgelegewelle zu gestalten. Dadurch muß jedoch an der Adapterwelle eine zusätzliche Laufverzahnung angebracht werden und die Adapterwelle bedarf einer zusätzlichen Lagerung. Um die Drehmomente des Nebenabtriebs aufnehmen zu können, müssen die Lagerungen des Rückwärtsgang-Zwischenrades entsprechend verstärkt ausgeführt sein. Die Verzahnung des Rückwärtsgang-Zwischenrades muß somit auf den Nebenabtrieb und seine Beanspruchung ausgelegt werden.

In der nach der Anmeldung veröffentlichten DE 100 39 314 der Anmelderin ist ein Fahrzeuggetriebe mit einer Nebenabtriebswelle beschrieben, welches eine Adapterwelle umfaßt, die mit einer zur Hauptabtriebswelle des Fahrzeuggetriebes parallelen Vorgelegewelle verbunden ist. Die Adapterwelle ist dabei in einem Winkel zur Vorgelegewelle angeordnet, so daß der Abstand des Nebenabtriebsanschlusses am Ausgang des Fahrzeuggetriebes zur Rotationsachse der Hauptabtriebswelle größer ist als der Achsabstand zwischen der Rotationsachse der Vorgelegewelle und der Rotationsachse der Hauptabtriebswelle. Die Verbindung zwischen der Vorgelegewelle und der Adapterwelle weist ein Mitnahmeprofil auf, insbesondere ein Profil mit einer Bogenverzahnung.

GB-A-1 116 830 beinhaltet die Merkmale des Oberbegriffs des ersten Anspruchs.

Ausgehend von dem vorgenannten Stand der Technik ist es Aufgabe der vorliegenden Erfindung, einen variablen Achsabstand zwischen der Hauptwelle und der Vorgelegewelle eines Schaltgetriebes zu ermöglichen und die Nachteile des Standes der Technik zu vermeiden. Hierbei soll bei einem Schaltgetriebe in Standard-Vorgelegewellenbauweise an der antriebsseitig konstanten Übersetzung ein kleiner Achsabstand und bei großen Übersetzungen abtriebsseitig ein größerer Achsabstand vorliegen. Weiterhin soll bei einem Schaltgetriebe mit Nebenabtrieb der Abstand des Nebenabtriebsflansches zur Hauptwelle vergrößert werden bzw. unabhängig vom festgelegten Achsabstand sein.

Die Aufgabe wird erfindungsgemäß gelöst durch ein Schaltgetriebe in Vorgelegewellenbauweise mit den Merkmalen des Anspruchs 1. Vorteilhafte Ausgestaltungen sind in den Unteransprüchen angegeben.

Erfindungsgemäß sind bei einem Schaltgetriebe in Vorgelegewellebauweise die Vorgelegewelle achsparallel zur Eingangswelle anzuordnen und die Hauptwelle einschließlich der Ausgangswelle in einem Winkel zur Eingangswelle anzuordnen. Die Vorgelegewelle ist dabei, wiederum in Einbaulage des Getriebes, beispielsweise in einem Kraftfahrzeug gesehen, oberhalb der Hauptwelle angeordnet, so daß beispielsweise der Beugewinkel eines der Ausgangswelle nachgeschalteten Kardangelenks nun mit Vorteil geringer ist als bei einem Getriebe mit achsparalleler Haupt- und Vorgelegewelle.

Zur Verbindung der Eingangs- und der Hauptwelle ist ein Kegeltrieb, beispielsweise eine Kronenrad- oder Beveloid-Verzahnung vorgesehen. Damit kann vorteilhafterweise ein direkter Gang zwischen der Eingangswelle und der Hauptwelle bzw. der Ausgangswelle geschaltet werden, welche den Differenzwinkel zwischen der Eingangs- und der Hauptwelle ausgleicht.

Die Lagerung der Hauptwelle in der Eingangswelle wird vorteilhafterweise als ein Pendelkegelrollenlager ausgebildet und der ideelle Drehpunkt des Kegeltriebs sowie des Pendelkegelrollenlagers ist identisch.

Um den Achsversatz zwischen der Hauptwelle und der Vorgelegewelle zu ermöglichen, werden die die Schaltstufen bestimmenden Zahnräder als Beveloid-Räder ausgeführt. Vorteilhafterweise ist jeweils ein Rad eines Zahnradpaares, beispielsweise das auf der Hauptwelle angeordnete Rad, als zylindrisches Zahnrad ausgebildet und das jeweils korrespondierende Rad, beispielsweise das Rad auf der Vorgelegewelle, als Beveloid-Rad ausgeführt oder umgekehrt. Je nach Anwendungsfall können auch beide Räder, sowohl das auf der Haupt- als auch das auf der Vorgelegewelle, als Beveloid-Räder ausgebildet sein.

In einer Weiterbildung der Erfindung, beispielsweise für die Anwendung in einem Nutzfahrzeug, ist die Vorgelegewelle mit einer Adapterwelle für einen Nebenabtrieb verbunden. Der Achsabstand zwischen der Adapterwelle und der Hauptwelle ist so bemessen, daß beispielsweise ein auf der Hauptwelle angeordnetes Planetengetriebe mit der Adapterwelle gerade nicht kollidiert.

Vorteilhafterweise wird die Verwendung eines Schaltgetriebes in Vorgelegewellenbauweise nach der vorbeschriebenen Art in einem Kraftfahrzeug, insbesondere in einem Nutzfahrzeug, vorgeschlagen.

Selbstverständlich kann das vorbeschriebene Schaltgetriebe auch in einem anderen als dem vorbeschriebenen Kraftfahrzeug, beispielsweise für einen Schiffsantrieb, verwendet werden, wobei insbesondere durch die Schrägstellung der Hauptwelle relativ zur Eingangswelle der bei einem Schiffsantrieb erforderliche Schrägungswinkel der Schraubenwelle einstellbar ist.

Weitere Ziele, Vorteile und Ausgestaltungen der Erfindung ergeben sich aus der nachfolgenden Beschreibung der Ausführungsbeispiele, die in den Figuren näher dargestellt sind. Dabei bilden alle beschriebenen und/oder bildlich dargestellten Merkmale bzw. Kennzeichen für sich oder in beliebiger sinnvoller Kombination den Gegenstand der Erfindung, unabhängig von der Zusammenfassung in den Ansprüchen und der Rückbeziehung.

Die Erfindung wird anhand der nachfolgenden Zeichnungen erläutert.
Es zeigen:
- Fig. 1: ein nicht beanspruchtes Schaltgetriebe in Vorgelegewellenbauweise, wobei die Vorgelegewelle in einem Winkel zur Eingangswelle angeordnet ist, in Schnitt-Darstellung;
- Fig. 2: ein erfindungsgemäßes Schaltgetriebe, wobei die Hauptwelle in einem Winkel zur Eingangswelle angeordnet ist, in Schnitt-Darstellung;
- Fig. 3: das Schaltgetriebe in einer Seitenansicht A nach Fig. 1;
- Fig. 4: das Schaltgetriebe in einer Seitenansicht B nach Fig. 2 und
- Fig. 5: ein Detail X gemäß Fig. 2 in vergrößerter Darstellung.

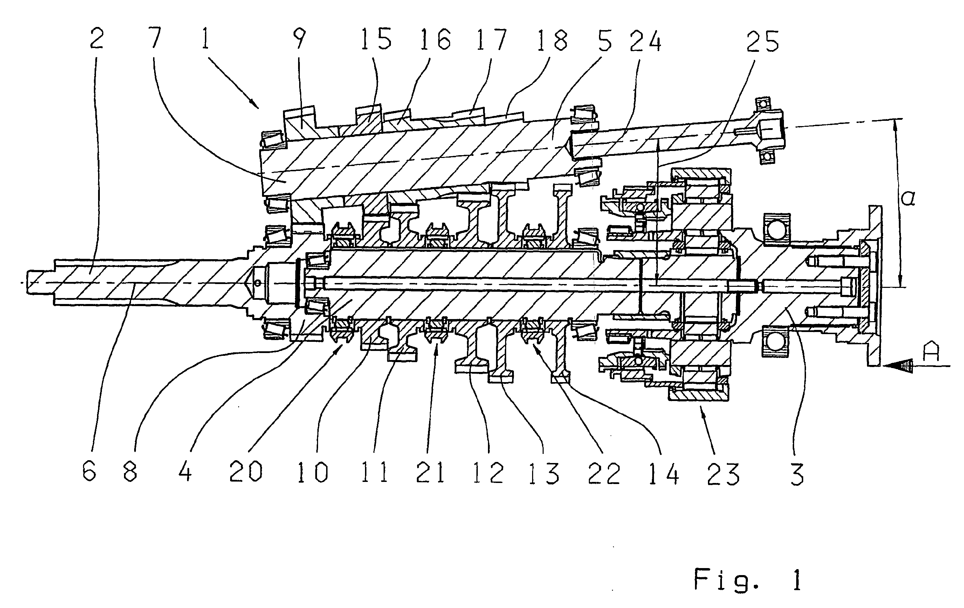

Das Schaltgetriebe 1 (Fig. 1) besteht im wesentlichen aus einer Eingangswelle 2, einer Ausgangswelle 3 mit einem Ausgangsflansch sowie einer dazwischen angeordneten Hauptwelle 4, wobei Eingangs-, Haupt- und Ausgangswelle eine gemeinsame Rotationsachse 6 aufweisen. Eine Vorgelegewelle 5 ist derart angeordnet, daß zwischen den Rotationsachsen 7 der Vorgelegewelle 5 und der Rotationsachse 6 der Hauptwelle 4 ein Winkel α entsteht.

Ein Zahnradpaar 8, 9 verbindet die Eingangswelle 2 mit der Vorgelegewelle 5 mit einer antriebsseitigen Konstantübersetzung. Auf der Hauptwelle 4 sind weitere Zahnräder 10, 11, 12, 13 und 14 drehbar angeordnet, die mittels Synchronisiereinrichtung 20, 21 und 22 jeweils mit der Hauptwelle 4 zur Drehmomentübertragung verbunden werden können. Zu diesen Zahnrädern 10, 11, 12 und 13 sind korrespondierende Zahnräder 15, 16, 17 und 18 auf der Vorgelegewelle 5 angeordnet, welche mit einer Beveloid-Verzahnung ausgestattet sind. Das Zahnrad 14 auf der Hauptwelle 4 ist als Rückwärtsgang-Zahnrad ausgebildet und mit einer nicht dargestellten Zwischenwelle verbunden.

Auf der Hauptwelle 4 ist abtriebsseitig ein Planetenradsatz 23 angeordnet. In Verlängerung der Vorgelegewelle 5 ist eine Adapterwelle 24 zur Verbindung mit einer Nebenabtriebswelle vorgesehen, wobei die Rotationsachse 6 der Eingangs- bzw. Hauptwelle zur Rotationsachse 7 der Vorgelege- bzw. Adapterwelle 5, 24 einen Achsabstand 25 aufweist. Dieser ist so bemessen, daß die Adapterwelle 24 gerade nicht mit dem Hohlrad des Planetenradsatzes 23 kollidiert.

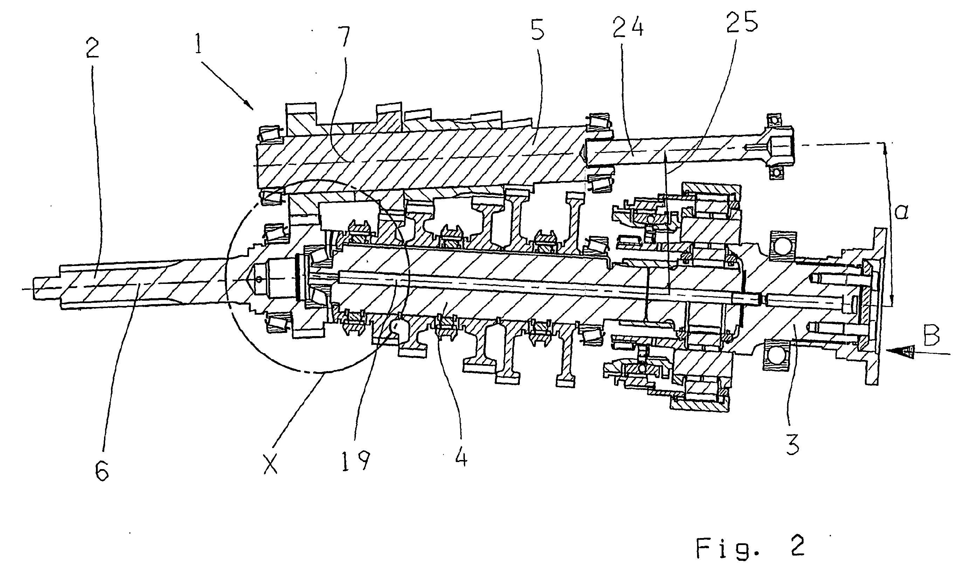

Erfindungsgemäß ist die Vorgelegewelle 5 (Fig. 2) eines Schaltgetriebes 1 achsparallel zur Eingangswelle 2 angeordnet. In Fig. 2 sind lediglich die zur Erläuterung der Figur erforderlichen Bauteile numeriert. Bei im wesentlichen baugleichen Teilen in Fig. 1 und Fig. 2 sind diese der Einfachheit halber auch mit den selben Bezugszeichen versehen. Die Hauptwelle 4 ist relativ zur Eingangswelle 2 verschwenkt angeordnet, so daß die Rotationsachse 6 der Eingangswelle 2 bzw. die Rotationsachse 7 der Vorgelegewelle 5 relativ zur Rotationsachse 19 der Hauptwelle 4 einen Winkel α erzeugt. Zwischen der Rotationsachse 19 der Hauptwelle 4 und der Rotationsachse 7 der Vorgelegewelle 5 ist ein Achsabstand 25 eingestellt.

Die Ausgangswelle 3 ist koaxial zu der Hauptwelle 4 angeordnet und mit dieser verbunden.

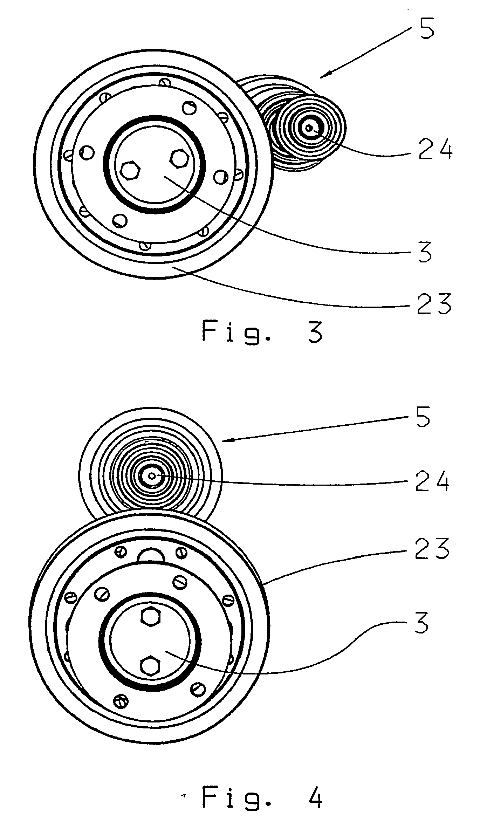

Bei einer Ansicht (Fig. 3) aus Blickrichtung A in Fig. 1 erkennt man, daß die Vorgelegewelle 5 mit der Adapterwelle 24 im wesentlichen seitlich zur Ausgangswelle 3 und dem Planetenradsatz 23 angeordnet ist.

Bei einer Ansicht (Fig. 4) aus Blickrichtung B auf die Stirnseite des Schaltgetriebes 1 nach Fig. 2 erkennt man, daß die Vorgelegewelle 5 mit der Adapterwelle 24 im wesentlichen oberhalb der Ausgangswelle 3 mit dem Planetenradsatz 23 angeordnet ist.

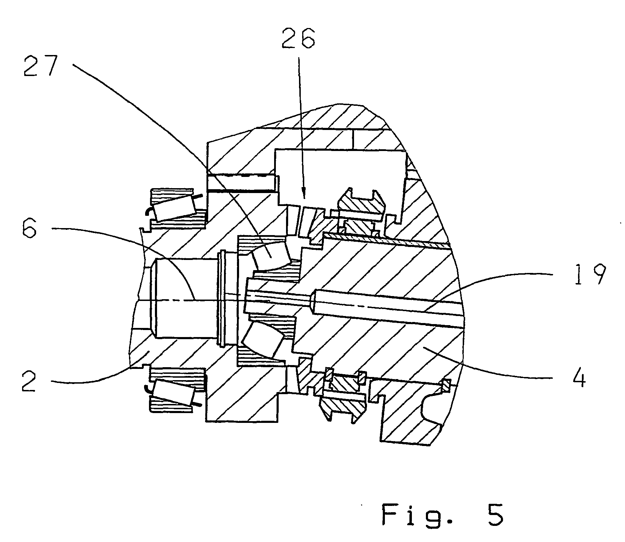

Bei einer Vergrößerung (Fig. 5) des Details X aus Fig. 2 wird deutlich, daß zum einen zwischen der Eingangswelle 2 und der Hauptwelle 4 ein Kegeltrieb 26 vorgesehen ist. Dieser kann beispielsweise als Kronenrad- oder auch als Beveloid-Trieb ausgeführt sein. Andererseits ist die Hauptwelle 4 mittels eines Pendelkegelrollenlagers 27 in einer Bohrung der Eingangswelle 2 drehbar gelagert.

Das gezeigte Schaltgetriebe ist sowohl für Fahrzeuggetriebe mit einer als auch mit mehreren Vorgelegewellen anwendbar. Das Schaltgetriebe ist ferner sowohl für Anwendungen mit als auch ohne Nebenabtrieb bzw. Adapterwelle einsetzbar. Das vorgenannte Schaltgetriebe kann ferner als Schaltgetriebe in einem Schiffsantrieb verwendet werden, wobei vorteilhafterweise die Ausbildung mit einer relativ zur Eingangswelle schräggestellten Hauptwelle Verwendung findet. Hiermit kann vorteilhafterweise schon durch die Ausbildung des Getriebes eine Schrägstellung einer Schraubenwelle realisiert werden.

### Bezugszeichen

- 1: Schaltgetriebe
- 2: Eingangswelle
- 3: Ausgangswelle
- 4: Hauptwelle
- 5: Vorgelegewelle
- 6: Rotationsachse
- 7: Rotationsachse
- 8: Zahnrad
- 9: Zahnrad
- 10: Zahnrad
- 11: Zahnrad
- 12: Zahnrad
- 13: Zahnrad
- 14: Zahnrad
- 15: Zahnrad
- 16: Zahnrad
- 17: Zahnrad
- 18: Zahnrad
- 19: Rotationsachse
- 20: Synchronisiereinrichtung
- 21: Synchronisiereinrichtung
- 22: Synchronisiereinrichtung
- 23: Planetenradsatz
- 24: Adapterwelle
- 25: Achsabstand
- 26: Kegeltrieb
- 27: Pendelkegelrollenlager

- α: Winkel
- A: Ansicht
- B: Ansicht
- X: Detail

## Patentansprüche

1. Schaltgetriebe (1) in Vorgelegewellenbauweise mit einer Eingangswelle (2), welche mit einer Antriebsmaschine verbindbar ist, mit einer Ausgangswelle (3), welche mit wenigstens einer Antriebsachse verbindbar ist, mit einer dazwischen angeordneten Hauptwelle (4) sowie einer mit der Hauptwelle (4) zusammenwirkenden Vorgelegewelle (5), wobei auf der Hauptwelle (4) und der Vorgelegewelle (5) schaltbare Zahnradpaare angeordnet sind und die Hauptwelle (4) und die Vorgelegewelle (5) in einem Winkel (α) zueinander angeordnet sind, **dadurch gekennzeichnet, daß** die Vorgelegewelle (5) achsparallel zur Eingangswelle (2) und die Hauptwelle (4) in einem Winkel (α) zur Eingangswelle (2) angeordnet ist.

2. Schaltgetriebe nach Anspruch 1, **dadurch gekennzeichnet, daß** die Vorgelegewelle (5) in Einbaulage des Getriebes (1), beispielsweise in einem Kraftfahrzeug, oberhalb der Hauptwelle (4) angeordnet ist.

3. Schaltgetriebe nach Anspruch 1 oder 2, **dadurch gekennzeichnet, daß** zwischen der Eingangs-(2) und der Hauptwelle (4) ein Kegeltrieb (26), beispielsweise eine Kronenrad- oder Beveloid-Verzahnung, vorgesehen ist.

4. Schaltgetriebe nach Anspruch 3, **dadurch gekennzeichnet, daß** zwischen der Eingangs- (2) und der Hauptwelle (4) ein Pendelkegelrollenlager (27) vorgesehen ist.

5. Schaltgetriebe nach Anspruch 3 oder 4, **dadurch gekennzeichnet, daß** der ideelle Drehpunkt des Kegeltriebs (26) und des Pendelkegelrollenlagers (27) identisch ist.

6. Schaltgetriebe nach einem der vorangehenden Ansprüche, **dadurch gekennzeichnet, daß** je ein Rad oder beide Räder eines Zahnradpaares als Beveloid-Rad/-Räder ausgeführt ist/sind.

7. Schaltgetriebe nach einem der vorangehenden Ansprüche, **dadurch gekennzeichnet, daß** die Vorgelegewelle (5) mit einer Adapterwelle (24) für einen Neberiabtrieb verbunden ist.

8. Schaltgetriebe nach Anspruch 7, **dadurch gekennzeichnet, daß** der Achsabstand (25) zwischen der Adapterwelle (24) und der Hauptwelle (4) so bemessen ist, daß ein auf der Hauptwelle (4) angeordneter Planetenradsatz (23) mit der Adapterwelle (24) nicht kollidiert.

9. Verwendung eines Schaltgetriebes in Vorgelegewellenbauweise nach einem oder mehreren der Ansprüche 1 bis 8 in einem Kraftfahrzeug, insbesondere in einem Nutzkraftfahrzeug.

10. Verwendung eines Schaltgetriebes in Vorgelegewellenbauweise nach einem oder mehreren der Ansprüche 1 bis 8 in einem Schiffsantrieb.

## Claims

1. The invention relates to a countershaft-type manual transmission (1) with an input shaft (2), which can be linked to a driving motor, with an output shaft (3), which can be linked to at least one drive axle, with an interposed main shaft (4) and a countershaft (5) acting together with the main shaft (4), with shiftable gearwheel pairs being arranged on the main shaft (4) and the countershaft (5) and the main shaft (4) and the countershaft (5) being arranged at an angle (α) to each other, **characterized in that** arrangement of the countershaft (5) is axis-parallel to the input shaft (2) while the main shaft (4) is arranged at an angle (α) to the input shaft (2).

2. A manual transmission according to claim 1, **characterized in that** the countershaft (5) is arranged in the installed position of the transmission (1), in a vehicle, for example, above the main shaft (4).

3. A manual transmission according to claim 1 or 2, **characterized in that** a bevel gear (26), for example a crown or beveloid gear, is arranged between the input shaft (2) and the main shaft (4).

4. A manual transmission according to claim 3, **characterized in that** a self-aligning taper roller bearing (27) is arranged between the input shaft (2) and the main shaft (4).

5. A manual transmission according to claim 3 or 4, **characterized in that** the ideal center of rotation is the same for the bevel gear (26) and the self-aligning taper roller bearing (27).

6. A manual transmission according to one of the preceding claims, **characterized in that** in each gear pair one gear or both gears is/are designed as (a) beveloid gear(s).

7. A manual transmission according to one of the preceding claims, **characterized in that** the countershaft (5) is linked to an adapter shaft (24) for an auxiliary drive.

8. A manual transmission according to claim 7, **characterized in that** the center distance (25) between the adapter shaft (24) and the main shaft (4) is such that a planetary set (23) arranged on the main shaft (4) does not collide with the adapter shaft (24).

9. Use of a countershaft-type manual transmission according to one or several of the claims 1 through 8 in a motor vehicle, especially in a commercial vehicle.

10. Use of a countershaft-type manual transmission according to one or several of the claims 1 through 8 in a ship propulsion system.

## Revendications

1. Boîte de vitesses mécanique (1) à arbres intermédiaires dotée d'un arbre d'entrée (2), qui peut être accouplé avec une machine de propulsion, d'un arbre de sortie (3), qui peut être accouplé avec au moins un essieu moteur, d'un arbre primaire (4) interposé entre ces organes ainsi que d'un arbre intermédiaire (5) coopérant avec l'arbre primaire (4), sachant que sur l'arbre primaire (4) et l'arbre intermédiaire (5) sont disposés des trains d'engrenages couplables et que l'arbre primaire (4) et l'arbre intermédiaire (5) sont disposés, l'un par rapport à l'autre, dans un angle (α), **caractérisée en ce que** l'arbre intermédiaire (5) est disposé parallèle à l'axe de l'arbre d'entrée (2) et **en ce que** l'arbre primaire (4) est disposé dans un angle (α) par rapport à l'arbre d'entrée (2).

2. Boîte de vitesses mécanique selon la revendication 1, **caractérisée en ce que** l'arbre intermédiaire (5) est disposé, suivant l'orientation de la boîte de vitesses (1), par exemple dans un véhicule automobile, au-dessus de l'arbre primaire (4).

3. Boîte de vitesses mécanique selon la revendication 1 ou 2, **caractérisée en ce que** entre l'arbre d'entrée (2) et l'arbre primaire (4) est prévu un couple conique (26), par exemple une couronne dentée ou engrenages Beveloid.

4. Boîte de vitesses mécanique selon la revendication 3, **caractérisée en ce que** entre l'arbre d'entrée (2) et l'arbre primaire (4) est prévu un roulement à rotule sur rouleaux coniques (27).

5. Boîte de vitesses mécanique selon la revendication 3 ou 4, **caractérisée en ce que** le point de rotation idéal du couple conique (26) et celui du roulement à rotule sur rouleaux coniques (27) sont identiques.

6. Boîte de vitesses mécanique selon une des revendications précédentes, **caractérisée en ce que**, respectivement, un pignon ou les deux pignons d'un train d'engrenages est/sont réalisé(s) comme pignon(s) Beveloid.

7. Boîte de vitesses mécanique selon une des revendications précédentes, **caractérisée en ce que** l'arbre intermédiaire (5) est accouplé à un arbre adaptateur (24) d'une prise de mouvement.

8. Boîte de vitesses mécanique selon la revendication 7, **caractérisée en ce que** l'entraxe (25) entre l'arbre adaptateur (24) et l'arbre primaire (4) est dimensionné de manière à ce qu'il n'y ait aucune interférence entre un train épicycloïdal (23) disposé sur l'arbre primaire (4) et l'arbre adaptateur (24).

9. Utilisation d'une boîte de vitesses mécanique à arbres intermédiaires selon une ou plusieurs des revendications 1 à 8, dans un véhicule automobile, et en particulier dans un véhicule industriel.

10. Utilisation d'une boîte de vitesses mécanique à arbres intermédiaires selon une ou plusieurs des revendications 1 à 8, dans un propulseur d'un navire.
